# EUROPEAN PATENT APPLICATION

(11) **EP 1 333 682 A1**
(43) Date of publication of application: **06.08.2003**
(21) Application number: 03250540.6
(22) Date of filing: 29.01.2003
(51) Int. Cl.: H04N 7/36

(54) **Motion detection from an encoded image bit stream**

(30) Priority: 05.02.2002 KR 2002006572
(71) Applicant: SAMSUNG ELECTRONICS CO., LTD., Suwon-City, Kyungki-do (KR)
(72) Inventor: Cho, Jae-soo, 812-2004 Byukjeokgol 8danji Hansin, Suwon-city, Gyunggi-do (KR)
(74) Representative: Geary, Stuart Lloyd

(57) **Abstract**

Motion detecting apparatus has a separation unit (130), an operation unit (140) and a comparison unit (150). The separation unit (130) separates a bit stream in relation to a motion predicted image from a compressed encoded image bit stream. The operation unit (140) calculates an average value of the bit stream in relation to the motion predicted image separated at the separation unit (130). The comparison unit (150) detects a motion when the average value is greater than a predetermined threshold after comparing the average value and the threshold. Thus, because a motion in an input image can be detected by using a compressed encoded image bit stream, a separate circuit or input image processing is not required to detect the motion and adverse affects of camera noise on the detection results can be reduced.

## Description

The present invention relates to a video motion detection method and a video motion detection apparatus.

The amount of image data produced by digital monitoring systems can be enormous. Therefore, images from digital monitoring systems are generally compressed before being transmitted or stored. Motion detection, i.e. Detection of movement within the scene captured by a camera, is used to trigger the sending of an image to a remote operator for viewing on a PDA or an IMT terminal or uploading of the image to an FTP server.

When the above methods are applied, the monitoring system can be effectively operated without unnecessarily loading the system because of the large amount of data. Furthermore, when only images captured when there is movement in the scene are stored into a hard disk, as in the case of a DVR (Digital Video Recorder) for example, the efficiency of the hard disk usage can be improved. Thus, when a DVR product or a network monitoring system has a motion detection function, the efficiency of the product is improved.

A conventional method of motion detection is based on the difference between successive image. More particularly, a statistical value, such as an average or a standard deviation, is derived from the pixel values is a difference image, i.e. the result of subtracting the pixels of one image from another, is compared with an empirically determined threshold so that the motion can be detected from the image.

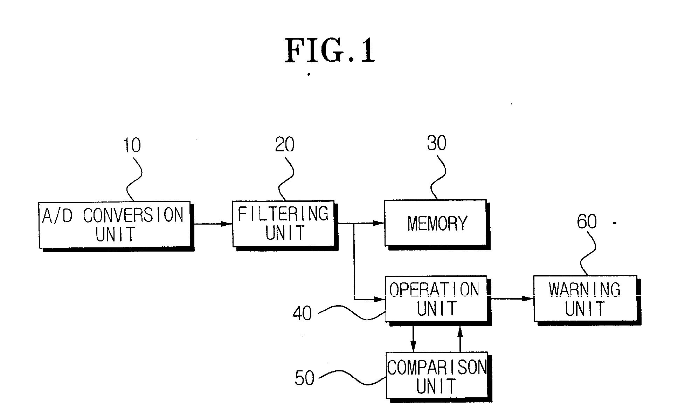

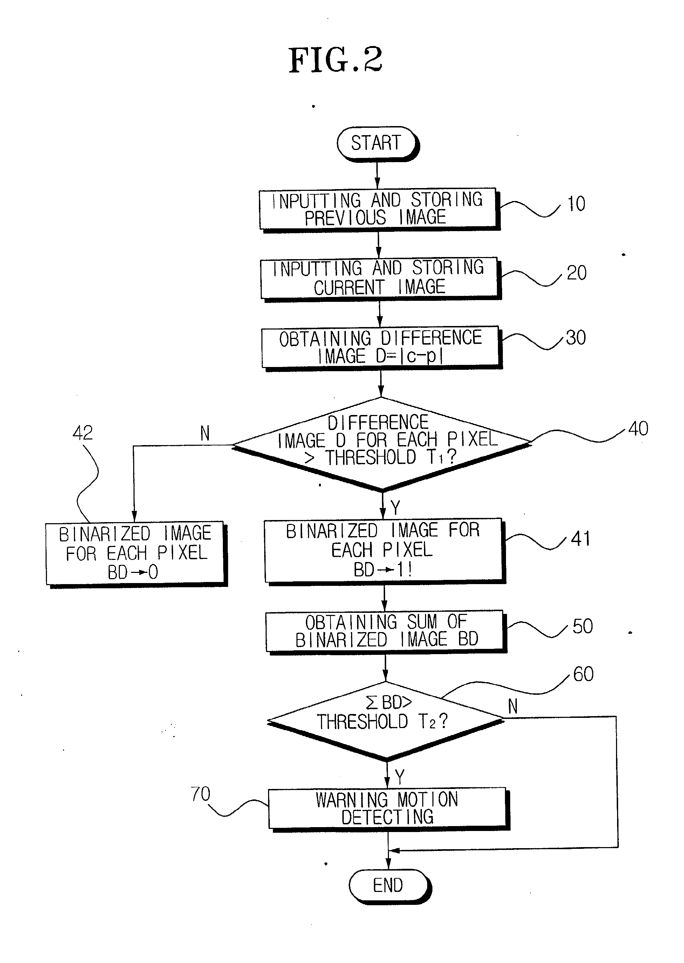

Figure 1 is a block diagram of a conventional apparatus for detecting motion in an input image using the difference image technique, and Figure 2 is a flowchart showing a method of detecting motion used by the detecting apparatus shown in Figure 1.

Referring to Figure 1, a conventional motion detecting apparatus comprises an A/D conversion unit 10, a filtering unit 20, a memory 30, an operation unit 40, a comparison unit 50 and a warning unit 60.

Referring to Figure 2, the A/D conversion unit 10 initially converts an analogue image signal, from a camera, into a digital signal. Noise is removed from the converted digital image data at the noise removing filtering unit 20, and then the noise-free converted digital image data is input into the memory 30 and the operation unit 40. At operations 10 and 20, the memory 30 stores a previously input image (P) and a currently input image (C) for comparison and, at operation 30, the operation unit 40 obtains a difference image (D) from the noise free currently input image (C) and the previously input image (P), stored in the memory 30. At operation 40, the comparison unit 50 compares the difference image (D) value for each pixel with a threshold (t1) to determine which pixels are in a moving part of the scene and, at operations 41, 42, a motion binarization process generates a binarized motion image by setting each pixel to one one of two values, corresponding to motion and static, in operation 40). Then, at operation 50, the operation unit 40 calculates the sum (ΣBD) of the pixels of the binarized image (BD). At operation 60, the sum (ΣBD) of the pixels of the binarized image (BD) is compared with a predetermined threshold (t2). At operation 60, if the sum (ΣBD) of the binarized image (BD) is greater than the threshold (t2), it is determined that there has been motion scene and, at operation 70, a motion detection warning is generated by the warning unit 60.

The motion detecting method using the difference image can obtain a great amount of information from each pixel unit and has the advantage of detecting motion by using various statistical features of the difference image. However, the operation of the conventional motion detection method is slow because data is obtained and processed for each pixel and there is a disadvantage in that the detected result can be sensitive to or negatively impacted by camera noise or a change in the external environment.
Moreover, the method of detecting the motion in an input image by using the difference image requires extra frame memory to store the previous and current input image data to compare the previously input image and the currently input image. Such a method also requires a noise-removing filter to prevent mis-operation caused by the camera noise. Furthermore, it is difficult to set up the thresholds (t1) and (t2) so that motion can be reliably detected.

A video motion detection method according to the present invention is characterised byobtaining inter-frame coded frames of a video bit stream comprising inter-frame and intra-frame coded frames, maintaining an average of the inter-frame coded frame bit lengths and determining the presence of motion in the scene represented by said video bitstream using said average.

A video motion detection apparatus according to the present invention is characterised by means for obtaining inter-frame coded frames of a video bit stream comprising inter-frame and intra-frame coded frames, means for maintaining an average of the inter-frame coded frame bit lengths and means for determining the presence of motion in the scene represented by said video bitstream using said average.

The presence of motion may be detected by comparing said average with a threshold. However, the presence of motion is preferably detected by comparing the rate of change of said average with a threshold.

The means for extracting inter-frame coded frames, the means for maintaining an average of the inter-frame coded frame bit length and the means for determining the presence of motion in the scene represented by said video bitstream using said average may be implemented by a programmed computer.

According to the present invention, there is also provided a signal, e.g. a series data packets, representing computer program codes for programming a computer to form an apparatus according to the present invention.

The signal may be an electric or electromagnetic signal.

According to the present invention, there is also provided a data carrier, e.g. a CDROM, from which a signal according to the present invention can be reproduced.

Embodiments of the present invention will now be described, by way of example, with referene to Figures 3 to 8B ofthe accompanying drawings, in which:
Figure 1 is a block diagram of a conventional motion detection apparatus detecting motion in image data;
Figure 2 is a flowchart of the motion detection method used by the apparatus of Figure 1;
Figure 3 is a block diagram of an image processing system according to the present invention;
Figures 4, 5A and 5B are flowcharts illustrating the operation of the system shown in Figure 3;
Figures 6A and 6B are graphs of bit lengths in an intra mode and in an inter mode;
Figures 7A and 8A are graphs showing average values of bit streams; and
Figures 7B and 8B are graphs showing average values of an inter mode image bit stream of an inter mode.

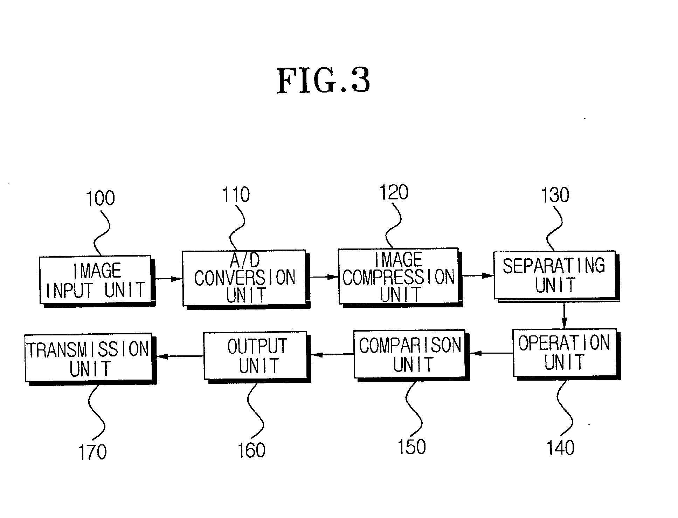

Referring to Figure 3, an image processing system comprises an image input unit 100, an A/D conversion unit 110, an image compression unit 120, a separation unit 130, an operation unit 140, a comparison unit 150, an output unit 160 and a transmission unit 170.

The image input unit 100 is a device, such as a video camera, for converting an image into an electrical signal. The image signal may be analogue or digital depending on the nature of the image input unit 100. If the image signal is analogue, the A/D conversion unit 110 converts it into a digital signal.

The image compression unit 120 encodes and compresses the digital image signal received from the A/D conversion unit 110 (or the image input unit 100 if it is a digital device). There are two kinds of frames in the bit stream output by the image compression unit 120. In the first kind, the bit stream is formed by encoding the received digital image signal with motion predicton. In the second kind, the bit stream is formed by encoding the the received digital image signal without motion prediction. The motion prediction can use an inter mode (i.e. based upon an inter-frame compression technique) that transmits the difference between first and second frames in terms of motion vectors for macro blocks. When motion prediction is not used, an intra mode compression technique, such Discrete Cosine Transform (DCT), is applied to the current frame without reference the neighbouring frames.

The separation unit 130 separates out the frames for which the inter mode encoding and compression has been used by the image compression unit 120. In other words, the the inter mode coded frames, but not the intra mode coded frames, in the bit stream are passed to the operation unit 140.

The operation unit 140 calculates an average value of the inter mode frames from the separation unit 130. The comparison unit 150 compares a signal corresponding to the average value input from the operation unit 140 with a signal corresponding to a threshold set up in advance, and if the signal corresponding to the average value is greater than the threshold, the comparison unit 150 determines that there is motion in the scene and sends a detection signal to the output unit 160.

The output unit 160 determines that there is movement (motion) when the detection signal is transmitted from the comparison unit 150 to the output unit 160, and outputs a warning signal in response to the detected motion. For example, a warning sound can be generated or a warning message can be transmitted to a remote terminal, such as a wireless terminal. Furthermore, the transmission unit 170 transmits the frame in which motion was detected through a network in response to a warning signal (e.g., when a warning signal is transmitted from the output unit 160 to the transmission unit 170, etc.). Typically, the output unit 160 and the transmission unit 170 can be part of an existing network image monitoring system and interfaced with processing units 110 through 150.

The amount of data for an inter mode coded frame becomes great when there is motion in the scene being monitored. Therefore, the average value of the inter mode coded frames can be a substantially reliable predictor of motion. More particularly, an increase in the average value of the inter mode coded frames indicates motion and, thus, when detected enables a motion detection signal to be reliably output.

The processes of the present invention as embodied in units 100 through 150 can be implemented using software and/or hardware as part of a main processing unit of a network digital image monitoring system receiving video camera signals (e.g., a computer server). The main processing unit would output and/or transmit information (e.g. warning signals, images, etc.) to other devices of the network digital image monitoring system, in response to detected motion in images received from a camera monitoring an area.

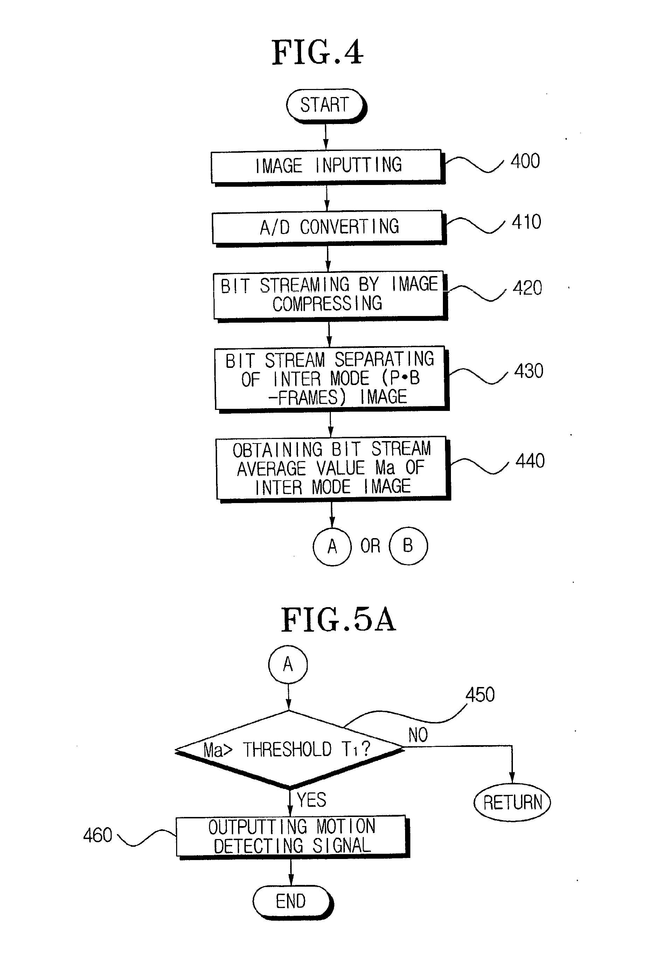

Referring to Figures 4 and 5A, at operations 400 and 410, when an analogue image signal is output from the image input unit 100, the A/D conversion unit 110 converts the analogue signal into a digital signal. At operation 420, the digital signal is input into the image compression unit 120 and encoded according to an encoding method to output compressed bit streams. Typically, the image compression unit 120 uses a combination of inter-frame and intra-frame compression/encoding methods, as in MPEG (Moving Picture Experts Group) encoding, which encodes the received digital image signal.

Using the MPEG encoding standard as an example, when the inter mode coded frames and the intra mode coded frames are output from the image compression unit 120 and input into the separation unit 130, at operation 430, the separation unit 130 separates the inter mode coded frames (i.e. B- and P- frames) from the intra mode coded frames by passing only the inter mode coded frames to the operation unit 440. The operation unit 140 obtains an average size value (Ma) for the data representing the inter-mode coded frames. The average value of the inter mode coded frames is very small when there is little movement but increases when there is movement.

When the average value for the inter mode coded frames has been obtained by the operation unit 140 and input into the comparison unit 150, the comparison unit 150 compares the average value with a set up threshold T_{1,} at operation 450. At operation 460, if the obtained average value is greater than the threshold T₁, a corresponding motion signal, indicating motion detection, is output. More particularly, at operation 450, if it is determined that the average value for the inter mode coded frames is greater than the threshold T₁, at operation 460, the output unit 160 determines there is motion in the received image sequence in response to the motion detection signal from the comparison unit 150 and outputs a warning signal in response to the motion detection. Furthermore, the transmission unit 170 can transmit the image data with the detected motion through the network based on the warning signal. More particularly, at operation 460, the output unit 160 implemented as a control process (software) can control warning of motion detection, storing of corresponding image data, or transmission of a motion detection message by electronic messaging, e.g. Email or SMS, to a PDA or a mobile phone.

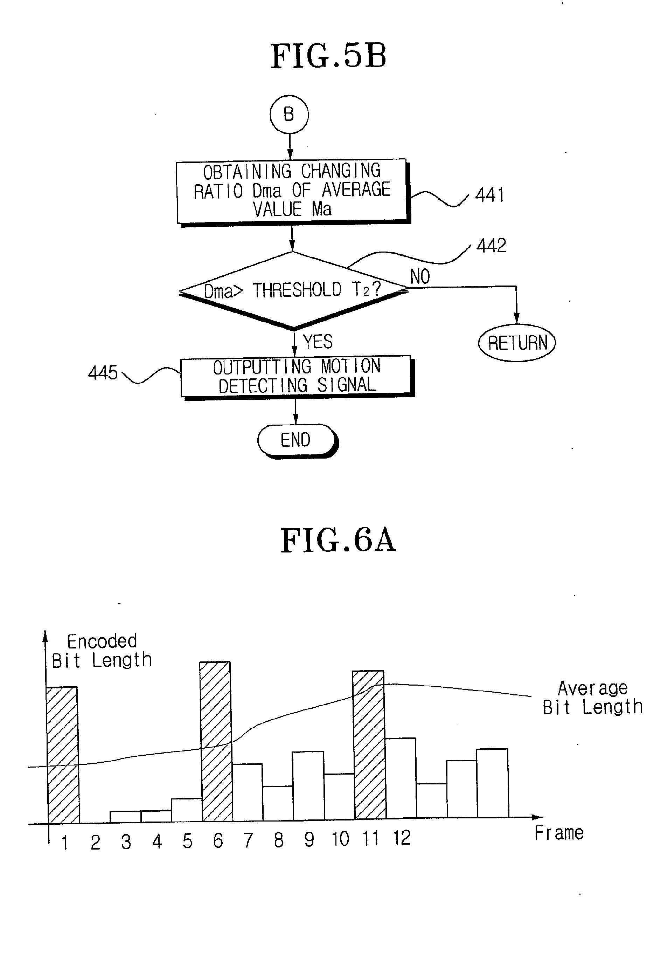

Referring to Figure 5B, in another embodiment, at operation 440, the operation unit 140 obtains the average value (Ma) of the inter mode image bit stream, and after that, at operation 441, calculates the change (DMa) of the average value (Ma) between successive frames. At operation 442, the comparison unit 150 determines whether there is movement in the received image signal by comparing the obtained change (DMa) with a threshold T₂. More particularly, at operation 442, if the obtained change is greater than the threshold T₂, the comparison unit 150 determines that there is motion in the received image signal and outputs a motion detection signal to the output unit 160. At operation 441, the change in the average between the inter mode coded frames is almost zero when there is little movement. Yet, when there is movement in the received image signal, the change in the average (DMa) between inter mode coded frames is very large compared to the case that there is not movement. The threshold T₂ is set according empirically.

At operation 445, the output unit 160 determines that there is motion in the received image signal in dependence on the motion detection signal from the comparison unit 150 and outputs a warning signal in response to the motion detection. More particularly, the processes of operation 445 by the output unit 160 are similar to the processes of the output unit 160 at operation 460 in Figure 5A.

Motion detection in a video signal by an automatic network image monitoring system according to the present invention will now be described.

The image input unit 100 can be one or more video cameras installed in to monitor an monitored area and in communication, via a network, with a main processing unit (not shown), such as a computer. Typically, the processes of the present invention are implemented in the processing unit. Typically, the image input unit 100 transmits image data as an analogue signal to the processing unit when a camera is an analogue camera and the image input unit 100 transmits the image data as a digital signal when the camera is a digital camera. When the image data is input as an analog signal, the image data is converted into a digital signal by the A/D conversion unit 110. When the image input unit 100 comprises digital video cameras, the A/D conversion unit 110 does not have to be installed (i.e. the A/D conversion unit 110 may be omitted).

When the image signal is input, the automatic monitoring system network can, for example, transmit the image signal to other components and devices, such as a display monitor, and can compress the input image signal for storage in a DVR. When the input image signal is compressed, the image compression unit 120 encodes the image signal, using a combination of inter-frame and intra-frame compression techniques. The image compression unit 120 outputs an encoded bit stream.

The bit stream output from the image compression unit 120 is transmitted to the separation unit 130. The separation unit 130 is set up to pass the inter mode coded frames only. Thus, the inter mode coded frames and the intra mode coded frames are separated and only the inter mode coded frames are transmitted to the operation unit 140. The operation unit 140 calculates the average value of the amount data required for an inter mode coded frame and transmits a signal corresponding to the average value to the comparison unit 150. The comparison unit 150 compares the input average value signal with a predetermined threshold. When the average value is greater than the threshold, it is determined that there is movement in the received image signal and a corresponding motion signal is output. If the average value is less than the threshold, it is determined that there is no movement. When there is no movement in the received image signal, the average data size is very large. Thus, a threshold can be easily determined and a motion in a frame image can be easily detected based upon size of the average value of the inter mode coded frames. Furthermore, when the change in the average value is calculated and compared with a threshold, detection of a motion is improved.
When the corresponding motion signal is output from the comparison unit 150, it has been determined that there is movement in the received image signal and the signal is transmitted to the output unit 160 from the comparison unit 150. The output unit 160 can output a warning signal, in response to the received motion signal from the comparison unit 150. When the warning signal is output, the frame with the detected motion is stored into the DVR and variously emails or other message types are sent to an owner, the police or a security company. The emails or oither messages may included the frame with the motion and use sound.

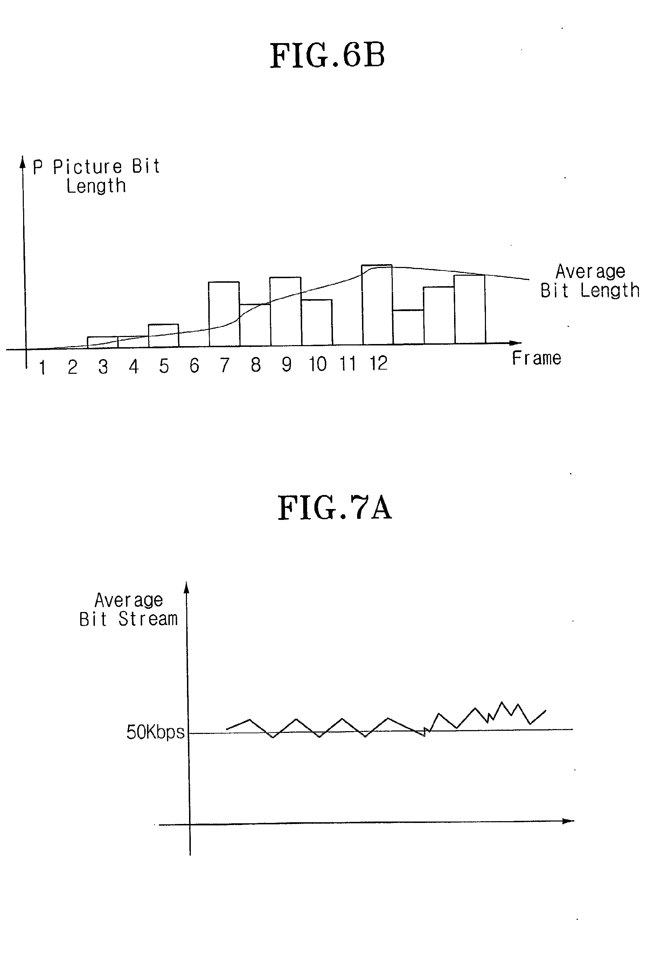

Referring to Figures 6A and 6B, frames 1, 6 and 11 are intra mode coded frames (I-Frame), frames 3, 4, 5, 7, 8, 9, 10 and 12 are inter mode coded frames (B-Frames and P-Frames), and the solid line is the average bit length. A motion is included in frame 3. The bit length of the intra mode coded frames are more than the average bit length. Thus, it would be difficult to detect motion from a bit stream including I-Frames and this provides the rationale for separating the intra-mode coded frames from the inter-mode coded frames. Therefore, motion can be easily detected depending upon changes in the bit lengths of inter mode coded frames, which represent the difference between a motion compensated image and an original image after finding a motion vector between the motion compensated frame image and the original image frame.

Referring to Figure 6B, when there is little motion in the image, the bit length of the inter mode coded frames is almost zero, see for example frame 2. However, when there is much motion in the image, the bit length of the inter mode coded frames is long in relation to the average bit length for inter mode bit coded frames,see for example frames 7, 8, 9, 10 and 12. Therefore, motion can be easily and reliably detected if the bit length of an inter mode coded frame is longer than the average bit length of the inter mode coded frames.

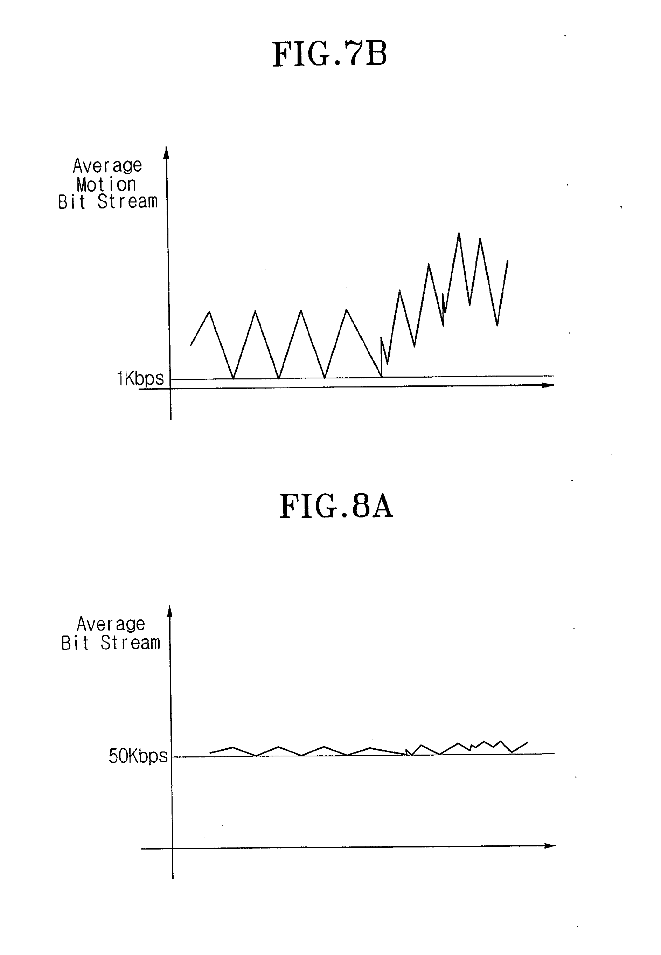

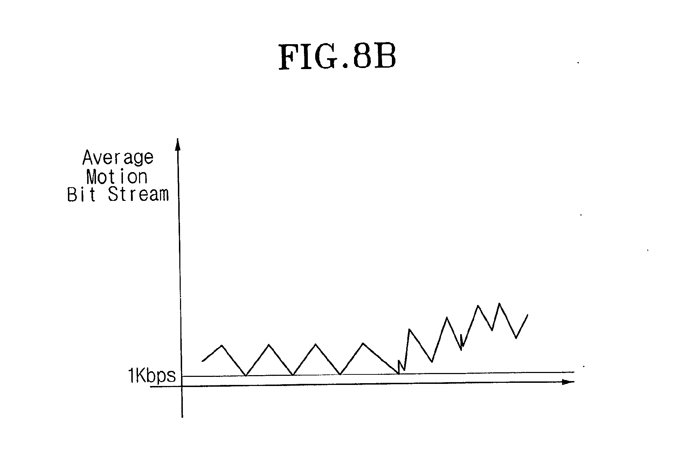

Referring to Figures 7A and 8A, the average bit length value for the whole encoded bit stream, i.e. with both inter mode and intra mode coded frames, shows very little change in response to motion occuring. Even, if a threshold is set high, the motion is hardly detectable. Thus, supporting the rationale for excluding the intra mode image bit stream. However, as shown in Figures 7B and 8B, when only the inter mode coded frames are used, the deviation arising from motion is great in relation to the average bit length of the inter mode coded frames and, thus, motion is easily and reliably detected even though a low threshold has been set.

Accordingly, the apparatus detecting motion in image signals and the method thereof according the present invention can easily and reliably detect motion by using inter mode coded frames after removing intra mode coded frames from the bit streams of the image. Advantageously, according to the present invention, the motion of the image can be detected by using an encoded bit stream already generated by compression processes in an image monitoring system, for example, for purpose of recording/archiving, without adding a separate circuitry or memory. More particularly, typically, only software processes utilizing the generated encoded bit streams are implemented in the image monitoring system. Further, motion detection can be more reliable by substantially reducing false motion detections because of an image signal noise.

## Claims

1. A video motion detection method **characterised by:**
obtaining inter-frame coded frames of a video bit stream comprising inter-frame and intra-frame coded frames;
maintaining an average of the inter-frame coded frame bit lengths; and
determining the presence of motion in the scene represented by said video bitstream using said average.

2. A method according to claim 1, wherein the presence of motion is detected by comparing said average with a threshold.

3. A method according to claim 1, wherein the presence of motion is detected by comparing the rate of change of said average with a threshold.

4. A video motion detection apparatus **characterised by**:
means (130) for obtaining inter-frame coded frames of a video bit stream comprising inter-frame and intra-frame coded frames;
means (140) for maintaining an average of the inter-frame coded frame bit lengths; and
means (150) for determining the presence of motion in the scene represented by said video bitstream using said average.

5. An apparatus according to claim 4, wherein the means (150) for determining the presence of motion is configured to detect motion by comparing said average with a threshold.

6. An apparatus according to claim 4, wherein the means (150) for determining the presence of motion is configured to detect motion by comparing the rate of change of said average with a threshold.

7. An apparatus according to claim 4, 5 or 6, wherein the means for extracting inter-frame coded frames, the means for maintaining an average of the inter-frame coded frame bit length and the means for determining the presence of motion in the scene represented by said video bitstream using said average are implemented by a programmed computer.

8. A signal representing computer program codes for programming a computer to form an apparatus according to claim 7.

9. A signal according to claim 8, comprising an electric or electromagnetic signal.

10. A data carrier from which a signal according to claim 8 can be reproduced.

11. An apparatus detecting a motion in an image data, comprising:
a separation unit separating a bit stream in relation to a motion predicted image from a compressed image bit stream;
an operation unit calculating an average value of the bit stream in relation to the motion predicted image; and
a comparison unit comparing the calculated average value and a predetermined threshold to output a motion detecting signal when the average value is greater than the predetermined threshold.

12. The apparatus detecting a motion in an image data of claim 11, wherein the motion predicted image is an inter mode image.

13. The apparatus detecting a motion in an image data of claim 11, further comprising an output unit outputting a warning signal in response to the motion detecting signal from the comparison unit.

14. The apparatus detecting a motion in an image data of claim 11, further comprising a transmission unit transmitting the image data with the detected motion in response to the motion detecting signal.

15. An apparatus detecting a motion in an image data, comprising:
a separation unit separating a bit stream in relation to a motion predicted image from a compressed image bit stream;
an operation unit calculating an average value in relation to the motion predicted image and a changing ratio of the average value; and
a comparison unit comparing the changing ratio of the average value and a predetermined threshold to output a motion detecting signal when the changing ratio is greater than the threshold.

16. The apparatus of detecting a motion in an image data of claim 15, wherein the motion predicted image is an inter mode image.

17. The apparatus of detecting a motion in an image data of claim 15, further comprising an output unit outputting a warning signal in response to the motion detecting signal from the comparison unit.

18. The apparatus of detecting a motion in an image data of claim 15, further comprising a transmission unit transmitting the image data with the detected in response to the motion detecting signal.

19. A method of detecting a motion in an image data, comprising:
separating a bit stream of a motion predicted image from a compressed bit stream;
calculating an average value of the bit stream of the motion predicted image; and
detecting the motion in the image data when the average value is greater than a predetermined threshold after comparing the average value and the threshold.

20. The method of detecting a motion in an image data of claim 19, further comprising outputting a motion detecting signal in response to a detected motion.

21. The method of detecting a motion in an image data of claim 20, further comprising transmitting the image data with the detected motion in response to the motion detecting signal.

22. A method of detecting a motion in an image data, comprising:
separating a bit stream of a motion predicted image from a compressed bit stream;
calculating a changing ratio of an average value of the bit stream of the motion predicted image; and
detecting the motion of the image data when the changing ratio is greater than a predetermined threshold after comparing the changing ratio and the threshold.

23. The method of detecting a motion in an image data of claim 22, further comprising outputting a motion detecting signal in response to a detected motion.

24. The method of detecting a motion in an image data of claim 23, further comprising transmitting an image data with the detected motion in response to the motion detecting signal.

25. A computer system, comprising:
a programmed computer processor detecting a motion in an input frame image of a sequence of frame images in response to a length of a compressed bit stream of a motion predicted image of the input frame image.

26. A network image monitoring system compressing image signals and detecting a motion in a frame image, comprising:
an image input unit transmitting the image signals; and
a programmed computer processor generating a compressed bit stream, separating a bit stream of a motion predicted image from the compressed bit stream, calculating an average value of the bit stream of the motion predicted image, and detecting a motion in the frame image based upon the calculated average value.
